# FASCICULE DE BREVET EUROPEEN

(11) **EP 0 748 296 B1**
(45) Date de publication et mention de la délivrance du brevet: **27.08.1997**
(21) Numéro de dépôt: 95910587.5
(22) Date de dépôt: 23.02.1995
(51) Int. Cl.: C02F 1/72

(54) **PROCEDE DE DECOMPOSITION OXYDATIVE DE COMPOSES ORGANIQUES PRESENTS DANS DES EFFLUENTS AQUEUX**
VERFAHREN ZUM OXIDATIVEN ABBAU VON ORGANISCHEN VERBINDUNGEN IN ABWÄSSERN
METHOD FOR OXIDATIVELY DECOMPOSING ORGANIC COMPOUNDS IN AQUEOUS EFFLUENTS

(30) Priorité: 28.02.1994 FR 9402276
(43) Date de publication de la demande: 18.12.1996
(73) Titulaire: ELF AQUITAINE, 92400 Courbevoie (FR)
(72) Inventeur: SOROKIN, Alexander, Fini de Coordination - CNRS, F-31077 Toulouse (FR); MEUNIER, Bernard, F-31320 Castanet (FR); SERIS, Jean-Louis, F-64110 Jurançon (FR)
(74) Mandataire: Boillot, Marc
(86) Numéro de dépôt international: FR9500212
(87) Numéro de publication internationale: WO9523118

(56) Documents cités:
- EP-A- 0 032 419
- EP-A- 0 262 054
- EP-A- 0 417 407
- EP-A- 0 572 698
- WO-A-91/08985
- PATENT ABSTRACTS OF JAPAN vol. 5, no. 148 (C-072) 18 Septembre 1981 & JP,A,56 081 137 (IDEMITSU KOSAN CO LTD) 2 Juillet 1981 & CHEMICAL ABSTRACTS, vol. 96, no. 2, 11 Janvier 1982, Columbus, Ohio, US; abstract no. 7772, 'ION EXCHANGE RESIN LOADED WITH METAL PHTHALOCYANINE' page 54 ;colonne L ; & US,A,3 290 383 (SOCIETE NATIONALE DES PETROLES D'AQUITAINE)

## Description

La présente invention a pour objet un procédé catalytique de dégradation oxydative de composés organiques difficilement oxydables présents dans des effluents aqueux.

La sauvegarde de l'environnement, préoccupation majeure de l'époque actuelle, passe par la dépollution des effluents aqueux des industries chimiques et para chimiques qui contiennent des composés organiques plus ou moins toxiques pour la flore et la faune ainsi que pour l'homme.

Pendant longtemps on a compté sur la dégradation naturelle des composés chimiques sous l'action des microorganismes pour résoudre le problème posé par la présence de ces composés. La biodégradation s'avère souvent insuffisante quand la quantité d'effluent devient trop importante et/ou quand les rejets aqueux contiennent des composés non ou peu biodégradables, par oxydation en particulier. C'est la raison pour laquelle il est devenu impératif de mettre à la disposition de l'industrie des procédés permettant d'éliminer ou de dégrader les composés toxiques présents dans les effluents aqueux en composés non toxiques et/ou facilement biodégradables avant le rejet des dits effluents dans les cours d'eau.

On a proposé de nombreux procédés à cet effet. Ainsi, la dégradation oxydative des composés organiques constitue un moyen souvent préconisé pour le traitement des effluents aqueux. Dans le brevet français n° 88 09169 publié sous le n° 2.633.925 on a décrit un procédé de dégradation oxydative d'alcools benzyliques et de composés organiques apparentés aux alcools benzyliques consistant à traiter lesdits composés par un oxydant peroxydique hydrosoluble tel que l'eau oxygénée et les persulfates alcalins en présence d'un chélate de fer ou de manganèse dérivé d'une porphyrine et, le cas échéant, d'une base azotée telle que la pyridine ou l'imidazole ou leurs dérivés.

Dans le brevet français n° 89 16690 publié sous le n°2.655.774, on a décrit un procédé analogue de dégradation oxydative de composés aromatiques difficilement oxydables, notamment de dérivés chlorés tels que le trichloro-2, 4, 6, phénol, au moyen de peroxydes hydrosolubles en présence de métallomésotétraphényl-porphyrines hydrosolubles dérivées plus particulièrement du fer et du manganèse. Le recours à des métalloporphyrines rendues hydrosolubles par la présence de substituants ioniques (groupes sulfoniques ou ammonium quaternaires) permet d'augmenter l'efficacité du catalyseur mais présente l'inconvénient de compliquer voire de rendre impossible la récupération du catalyseur, ce qui contribue à augmenter le coût du procédé et à ajouter un agent polluant à l'effluent traité. Pour conserver l'avantage de la catalyse en phase homogène sans en avoir les inconvénients, on a suggéré de fixer les métalloporphyrines sur des résines ioniques et en particulier sur des résines comportant des groupes ammonium quaternaires dans le cas de métalloporphyrines comportant des substituants sulfoniques. De cette façon, les métalloporphyrines supportées peuvent être aisément récupérées par simple filtration et recyclées ou bien les effluents peuvent être simplement traités en continu sur un lit de catalyseur supporté. Comme résine cationique, on a proposé d'utiliser des polyvinylpyridinium ou des copolymères du styrène comportant des groupes ammonium quaternaires tels que les copolymères styrène/chlorométhylstyrène quaternisés par une trialkylamine et réticulés. Toutefois, les meilleures activités catalytiques ont été obtenues avec le monopersulfate de potassium comme oxydant et en mettant en oeuvre les métalloporphyrines fixées sur des résines de type polyvinylpyridinium (cf. G. LABAT et B. MEUNIER C. R. Acad. Sci. Paris vol. 311 (1990), p. 625). Avec l'eau oxygénée, l'oxydation du trichlorophénol est plus lente qu'avec un monopersulfate alcalin (cf. G.LABAT et al Angew. Chem. Int. Ed. Engl. vol. 29 (1990) p.1471).

On a encore proposé de remplacer les métalloporphyrines, produits particulièrement onéreux, par des métallophtalocyanines hydrosolubles moins coûteuses, pour oxyder l'alcool diméthoxy-3, 4 benzylique par l'eau oxygénée (cf. W. ZHU et al J. Molecular Catalysis vol. 78 (1993) p.367-378). Les métallophtalocyanines dérivées du fer et du manganèse se sont révélées les plus actives ; l'emploi de latex cationiques constitués par des particules colloïdes insolubles de copolymères réticulés styrène/chloro-méthylstyrène quaternisés par la triéthylamine de 50 nm de diamètre moyen n'a pas eu d'effet apparent sur la cinétique de l'oxydation.

Le problème se pose donc de procéder à la dégradation oxydative de composés organiques toxiques, faiblement biodégradables et/ou particulièrement difficiles à oxyder, de façon aussi économique que possible et en satisfaisant aux objectifs de sauvegarde de l'environnement. La solution d'un tel problème passe par l'utilisation d'oxydants ne donnant pas naissance à des sous-produits polluants, de catalyseurs moins coûteux et plus efficaces que les métalloporphyrines et facilement recyclables. La présente invention se propose précisément d'atteindre ces différents objectifs.

Plus particulièrement, la présente invention a pour objet un procédé de dégradation oxydative de composés organiques peu biodégradables et/ou difficiles à oxyder chimiquement, présents dans des effluents aqueux , au moyen d'un oxydant peroxydique hydrosoluble en présence d'une métallophtalocyanine hydrosoluble supportée comme catalyseur, caractérisé en ce que le catalyseur est une phtalocyanine de fer ou de manganèse immobilisée sur une résine ionique constituée par un copolymère insoluble réticulé dérivé d'un monomère vinylaromatique comportant des groupes cationiques ou anioniques et l'oxydant est choisi parmi les sels alcalins de l'acide persulfurique tels que les mono persulfates de sodium et de potassium et l'eau oxygénée, cette dernière convenant particulièrement bien.

Au sens de la présente invention, on désigne plus spécifiquement par "composé difficilement oxydable par voie chimique" un composé organique ayant un potentiel d'oxydo réduction supérieur ou égal à 1,45 volts (référence : Ag/AgCl). Il a été constaté de façon inattendue par rapport à l'état de la technique que, dans le cas des composés organiques précités, la fixation de la métallophtalocyanine sur une résine ionique à squelette vinylaromatique permet d'en augmenter l'activité catalytique. Par ailleurs, l'activité catalytique des métallophtalocyanines immobilisées sur une résine ionique de ce type se révèle supérieure à celle des métallophtalocyanines déposées sur une résine de type polyvinylpyridine, contrairement à ce qui est rapporté pour les métalloporphyrines. Le procédé selon l'invention permet donc de dégrader dans de bonnes conditions des composés organiques particulièrement résistants à la biodégradation et à l'oxydation chimique, en mettant en oeuvre des oxydants non polluants et en particulier l'eau oxygénée, des catalyseurs moins coûteux et recyclables et des résines ioniques déjà largement utilisées dans le traitement des eaux en raison de leur innocuité.

Du fait de la synergie des métallophtalocyanures avec leur support en présence de peroxyde d'hydrogène ou d'un persulfate alcalin, l'oxydation de ces composés est plus poussée. En effet, contrairement aux métalloporphyrines, elle conduit à l'ouverture des cycles aromatiques. Dans le cas du trichlorophénol, l'oxydation n'est pas limitée à l'obtention de trichlorophénol mais conduit à l'obtention de diacides carboxyliques.

Dans les catalyseurs mis en oeuvre conformément à le présente invention la fixation de la métallophtalocyanine sur la résine est assurée par interaction entre les groupes ioniques de la résine et les groupes ioniques antagonistes situés à la périphérie du ligand macrocyclique de la métallophtalocyanine.

Les phtalocyanines de fer ou de manganèse hydrosolubles utilisées comme catalyseur dans le procédé selon l'invention sont des produits connus. Leur solubilité dans l'eau résulte de la présence, sur le reste phtalocyanine, de groupes hydrophiles tels que des groupes acides ou des groupes ammonium quaternaires. Parmi les groupes acides on peut citer les groupes hydroxycarbonyles et acides sulfoniques, ces derniers étant préférés et parmi les groupes ammonium quaternaires, les radicaux alkylpyridinium et les radicaux méthyltrialkylammonium. Plus spécifiquement on peut faire appel à des métallophtalocyanines de formule générale : 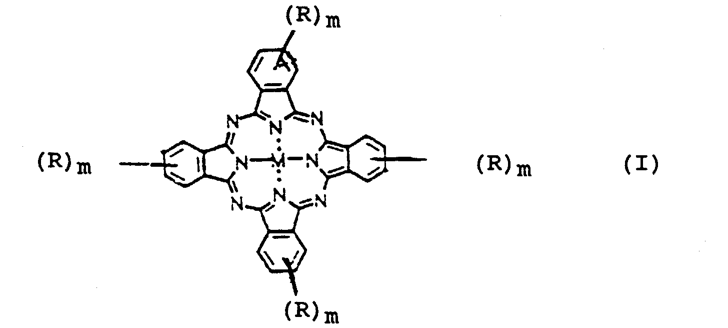 dans laquelle :
- M représente un atome de fer ou de manganèse;
- R représente :
   . un groupe acide sulfonique (-SO₃H) ;
   . un groupe ammonium quaternaire de formule générale -CH₂-(CH₂)ₙ-N⁺(R_{1,} R₂, R₃) X⁻ dans laquelle : n est 0 ou un nombre entier de 1 à 4; R₁, R₂, R₃ représentent des radicaux alkyles inférieurs (méthyle, éthyle, propyle, butyle); X représente un atome d'halogène (chlore, brome ou iode) ;
   . un radical pyridinium ;
   . un groupe alkyle inférieur ;
   . un reste aromatique tel que les radicaux phényles, tolyles, xylyles ;
- m est 0 ou un nombre entier de 1 à 4,
avec la restriction que l'un au moins des indices m est égal à 1 et que l'un au moins des substituants R représente un des radicaux hydrophiles précités.

Sauf indication contraire, on désignera par la suite par radical alkyle inférieur tout radical alkyle comportant de 1 à 4 atomes de carbone.

On peut encore mettre en oeuvre des phtalocyanines de fer ou de cobalt dérivées de tétraazaphtalocyanines quaternisées telles que celles décrites par C. C.LEZNOFF dans l'ouvrage PHTALOCYANINES Properties and Applications VCH Publishers, Inc. (1989).

Comme exemples spécifiques de métallophtalocyanines hydrosolubles, on peut citer à titre non limitatif : les monosulfophtalocyanines de fer et de manganèse ; les disulfophtalocyanines de fer et de manganèse ; les trisulfophtalocyanines et les tétrasulfophtalocyanines de fer et de manganèse obtenues par sulfonation des métallophtalocyanines par l'acide sulfurique fumant ou à partir de l'acide sulfo-4 phtalique ; les hydroxycarbonylphtalocyanines peuvent être préparées par action de l'acide trichloroacétique sur les métallophtalocyanines. Parmi les métallophtalocyanines à groupes ammonium quaternaire on peut citer l'iodure de tétrakis (méthyl, diéthyl, propylammonium)-2,9,16,23 phtalocyanine de fer et l'iodure de méthylpyridinium de la tétraazaphtalocyanine de fer. On a de préférence recours aux sulfophtalocyanines de fer et de manganèse.

Le choix de la résine échangeuse d'ions dépend de la nature de la métallophtalocyanine utilisée comme catalyseur. Pour immobiliser une métallophtalocyanine à groupes hydrophiles acides on fait appel à une résine vinyl aromatique cationique et à une résine anionique pour fixer une métallophtalocyanine à groupe hydrophile cationique. Plus spécifiquement on a recours à une résine échangeuse d'ions présentant une pluralité de motifs récurrents de formule générale : 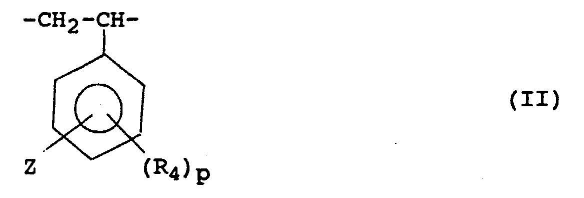 dans laquelle : Z représente un radical cationique ou anionique ; R₄ un radical alkyle inférieur ; p est 0, 1, 2. Dans la formule (II) Z représente plus particulièrement un groupe acide sulfonique ou groupe cationique de formule générale :

-CH₂-(CH₂)ₙ-N⁺(R₁, R₂, R₃) X⁻

dans laquelle n, R₁, R₂, R₃, et X ont la définition donnée précédemment pour la formule (I).

Dans la résine échangeuse d'ions les motifs récurrents de formule (II) sont associés à des motifs dérivés de monomères vinylaromatiques exempts de groupes ioniques et, de préférence, à une faible quantité de motifs dérivés d'un monomère réticulant comportant au moins deux groupes éthyléniques polymérisables tels que les groupes vinyles ou allyles. Comme exemples de motifs récurrents associés aux motifs de formule (II), on peut citer ceux répondant à la formule générale : 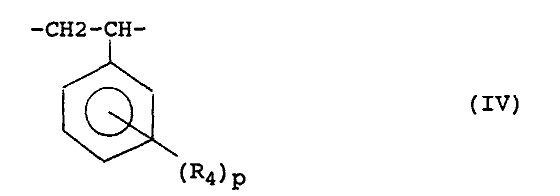 dans laquelle R₄ et p ont la signification donnée pour la formule (II).

Comme exemples spécifiques de monomères qui peuvent être utilisés pour l'obtention des motifs de formule (IV), on peut citer, à titre non limitatif, le styrène et l'alpha méthylstyrène. Parmi les monomères polyéthylèniques réticulants qui peuvent être de préférence associés aux monomères à groupes ioniques figurent le divinylbenzène, le phtalate de diallyle, les acrylates et méthacrylates de diols aliphatiques tels que l'éthylèneglycol.

La composition des résines ioniques utilisées pour l'immobilisation des métallophtalocyanines peut varier dans de larges limites. La proportion de motifs récurrents à groupes ioniques dépend du nombre de groupes ioniques portés par le motif récurrent considéré. En général le nombre de motifs récurrents portant des groupes ioniques est calculé pour que la résine sèche comporte de 1 à 10 milliéquivalents de groupe ionique par gramme. Un nombre de motifs récurrents réticulants représentant entre 0,1 et 25 % en moles et de préférence entre 0,5 et 10 % en moles du total des motifs récurrents présent dans la chaîne polymérique est en général suffisant pour conférer de bonnes propriétés mécaniques à la résine utilisée.

Le diamètre particulaire moyen de la résine peut varier dans de larges limites. Cependant afin d'obtenir une activité catalytique aussi élevée que possible, on fait appel à des résines présentant un diamètre particulaire moyen compris dans un intervalle de 80 à 1000 µm et, de préférence, de 200 à 500 µm.

Le catalyseur constitué par la métallophtalocyanine immobilisée sur le support polymère peut être obtenu par mise en contact de façon connue d'une résine ionique appropriée avec une solution aqueuse de la métallophtalocyanine, le cas échéant en présence d'un solvant organique inerte ; on peut faire appel par exemple à l'acétonitrile. Les quantités de phtalocyanine et de résine mises en oeuvre dépendent de leurs teneurs respectives en groupes ioniques. Elles sont généralement choisies pour assurer la présence d'une quantité de phtalocyanine proche de la quantité théorique maximale qui peut être fixée par la résine.

Comme composés faiblement biodégradables et à très faible oxydabilité chimique, on peut citer les hydrocarbures aromatiques polycycliques ; les hydrocarbures aromatiques mono ou polycycliques halogénés ; les hydrocarbures aliphatiques halogénés (halogénoalcanes) ;les hydrocarbures arylaliphatiques halogénés ; les halogénophénols. Comme exemples spécifiques de composés qui relèvent du procédé selon l'invention, on peut citer à titre non limitatif des hydrocarbures aromatiques tels que le pyrène, le benzo(a)pyrène, l'anthracène, le phénanthrène, le benzanthracène, le biphényle, des halogénoarylalcanes tels que le bis (chloro-4 phényl)-1, 1, trichloro-2, 2, 2, éthane (DDT); des halogènoalcanes ou cycloalcanes tel que l'hexachloro-1, 2, 3, 4, 5, 6, cyclohexane, des hydrocarbures aromatiques halogénés tels que les polychlorobiphényles : tétrachloro-3, 4, 3', 4', biphényle et hexachloro-2, 4, 5, 2', 4', 5', biphényle ; des halogénophénols tels que les polychlorophénols : dichloro-2, 4, phénol; trichloro-2, 4, 5, phénol; trichloro-2, 4, 6, phénol; pentachlorophénol; dichloro- 4, 5, guaiacol; trichloro-4, 5, 6, guaiacol. Le procédé selon l'invention convient tout particulièrement bien à la dégradation oxydative d'effluents aqueux contenant des polychloropénols provenant du blanchiment de la pâte à papier par chloration.

La température à laquelle est conduite l'oxydation des composés organiques peut varier dans de larges limites en fonction de la nature du substrat et/ou de l'oxydant. D'une manière générale, cette température peut être comprise entre 10°C et 100°C ; en général il est suffisant d'opérer à température ambiante. La quantité de catalyseur exprimée en équivalents molaires de métallophtalocyanine varie selon la nature du substrat soumis à l'oxydation. Des quantités de catalyseur apportant de 0,01 à 5 équivalents molaires de métallophtalocyanine pour 100 moles de substrat à oxyder conviennent bien.

Bien que la réaction soit conduite de préférence en milieu aqueux, un solvant inerte, de préférence miscible à l'eau, peut être utilisé le cas échéant lorsque le substrat à oxyder est peu soluble dans l'eau. On peut par exemple opérer en présence d'acétonitrile ou d'un alcool tel que le méthanol ou l'éthanol. Le pH du milieu réactionnel dépend de la nature de la métallophtalocyanine et de celle de l'oxydant. Ainsi, lorsqu'on fait appel à un catalyseur à base de Fe-phtalocyanine le pH est compris de préférence entre 2 et 7 alors qu'en présence d'une Mn-phtalocyanine le pH est de préférence compris entre 3 et 8,5. Le pH adéquat est obtenu en faisant appel à un système tampon approprié.

La quantité d'oxydant mise en oeuvre pour réaliser la dégradation du composé organique n'est pas critique et varie selon la nature de ce composé et celle de l'oxydant et selon les conditions de la réaction (température, quantité de catalyseur par exemple). Il est à la portée de l'homme de métier de déterminer cette quantité dans chaque cas particulier. Une quantité d'oxydant comprise entre 1 et 5 équivalents molaires par rapport au composé organique à oxyder convient en général bien.

Les exemples qui suivent, donnés à titre non limitatif, illustrent l'invention et montrent comment elle peut être mise en pratique. Dans ces exemples, les abréviations suivantes ont été utilisées :
- FePcS désigne le sel de sodium de la tétrasulfonato-4, 4', 4", 4"', phtalocyanine de fer ;
- MnPcS désigne le sel de sodium de la tétrasulfonato-4, 4', 4", 4"', phtalocyanine de manganèse ;
- CoPcS désigne le sel de sodium de la tétrasulfonato-4, 4', 4", 4"', phtalocyanine de cobalt ;
- Amb désigne une résine cationique connue sous la marque AMBERLITE IRA 900 et constituée par un copolymère styrène/chlorométhylstyrène réticulé par du divinylbenzène et quaternisé par la triméthylamine et comportant, par gramme de résine sèche, 3 à 5 milliéquivalents de groupes ammoniums quaternaires ;
- FePcS-Amb désigne le catalyseur obtenu par fixation de FePcS sur la résine Amberlite IRA 900
- MnPcS-Amb désigne le catalyseur obtenu par fixation de MnPcS sur la résine Amberlite IRA 900;
- PVP(25) désigne un copolymère vinylpyridine/divinylbenzène à 25 % en moles de divinylbenzène;
- FePcS-PVP(25) désigne le catalyseur obtenu par fixation de FePcS sur le copolymère vinylpyridine/divinylbenzène à 25 % en moles de divinylbenzène;
- PVPMe⁺(25) désigne un copolymère vinylméthylpyridinium/divinylbenzène à 25 % en moles de divinylbenzène;
- FePcS-PVPMe⁺(25) désigne le catalyseur obtenu par fixation de FePcS sur le copolymère vinylméthylpyridinium/divinylbenzène à 25 % en moles de divinylbenzène;
- PVP(2) et PVPMe⁺(2) désigne des copolymères vinylpyridine/divinylbenzène et vinylméthylpyridinium/divinylbenzène à 2 % en moles de divinylbenzène;
- FePcS-PVP(2) et FePcS-PVPMe⁺(2) désignent le catalyseur obtenu par fixation de FePcS sur le copolymère vinylpyridine/divinylbenzène à 2 % en moles de divinylbenzène et le catalyseur obtenu par fixation de FePcS sur le copolymère vinylméthylpyridinium/divinylbenzène à 2 % en moles de divinylbenzène;
- MnPcS-PVP(2) et MnPcS-PVPMe⁺(2) désignent les catalyseurs obtenus par fixation de MnPcS sur les copolymères vinylpyridine/divinylbenzène et vinylméthylpyridinium/divinylbenzène à 2 % en moles de divinylbenzène.

Les catalyseurs utilisés dans les exemples ont été obtenus selon les modes opératoires décrits ci-après.

### Préparation de FePcS-Amb :

On ajoute 1 g d'une résine cationique ayant un diamètre particulaire moyen de 500 µm, vendue sous la marque commerciale AMBERLITE IRA 900 par la société EGA CHEMIE à une solution de 10 mg (8,76 µmol) de FePcS dans un mélange de 20 ml d'eau et de 20 ml d'acétonitrile. Le complexe restant en solution est dosé par spectrométrie visible. Après 48 h d'agitation lente, la résine imprégnée est récupérée par filtration et lavée avec un mélange eau-acétonitrile (3 parties en volume pour 1 partie). Aucune trace de FePcS n'est détectée dans les eaux de lavage. La résine est ensuite séchée à l'air à 65°C pendant 65 h. Ce type de catalyseur supporté contient 6,75 µmol (7,7 mg) de FePcS par gramme de support. La teneur en métallophtalocyanine est déterminée par dosage spectrophotométrique de la quantité de complexe qui n'a pas été absorbé par le support. Ce catalyseur sera désigné ci-après FePcS-Amb-1.

On a préparé un second catalyseur supporté après avoir remplacé la résine de EGA CHEMIE par une résine vendue sous la même marque commerciale par la société ALDRICH et présentant un diamètre particulaire moyen de 500 µm. Le catalyseur supporté obtenu contient 4,3 µmol (4,9 mg) de métallophtalocyanine. Ce catalyseur sera désigné ci-après FePcS-Amb-2.

### Préparation de FePcS-PVP(25)

La PVP est préparée selon la méthode décrite dans la demande de brevet français n° 89 10761, par traitement basique d'une résine de polyvinylpyridinium réticulée à 25 % de diamètre particulaire moyen 500 µm. On ajoute 1 g de la PVP(25) ainsi obtenue à une solution de 12 mg (10,7 µmol) de FePcS dans 50 ml d'eau. Après 14 h d'agitation lente, on filtre le polymère imprégné puis on le lave avec un mélange de 3 volumes d'eau avec 1 volume d'acétonitrile. Le complexe n'est pas relargué dans le mélange de lavage. Le séchage se fait pendant 65 h à 65°C. La teneur en métallophtalocyanine du catalyseur ainsi obtenu est de 1,25 µmol (1,4 mg) par gramme de polymère imprégné.

### Préparation de FePcS-PVPMe⁺(25) :

On prépare ce type de catalyseur à partir du catalyseur FePcS-PVP(25) obtenu précédemment. Pour cela on procède à la méthylation, à l'aide de tosylate de méthyle, des résidus pyridine non engagés dans une coordination avec le métal du complexe selon la méthode de S. CAMPESTRINI et B MEUNIER décrite dans Inorganic Chemisty, 1992, vol 31, p. 1999. La teneur en FePcS du catalyseur ainsi obtenu est de 1,06 µmol (1,2 mg) par gramme de polymère modifié.

### Préparation de FePcS-PVP(2) :

1 g de polyvinylpyridine, préparée par traitement en milieu basique de polyvinylméthylpyridinium réticulée à 2 % de diamètre particulaire compris entre 87 et 174 µm, est ajouté à 13,4 mg (11,9 µmol) de FePcS en solution dans un mélange eau-acétonitrile (20 ml/20 ml). Après 77 h d'agitation lente, le polymère imprégné est filtré puis lavé avec un mélange eau-acétonitrile (3 volumes pour un volume) et séché à l'air pendant 6 h à 65°C. La teneur en FePcS du catalyseur ainsi obtenu est de 6,2 µmol (7,1 mg) par gramme de polymère modifié.

### Préparation de FePcS-PVPMe+(2) :

On prépare ce type de catalyseur à partir du catalyseur FePcS-PVP(2) obtenu précédemment par méthylation des résidus pyridine à l'aide de tosylate de méthyle selon la méthode décrite précédemment. La teneur en FePcS du catalyseur ainsi obtenu est de 4,1 µmol (4,7 mg) par gramme de polymère modifié.

### Préparation de MnPcS-PVP(2) :

On a opéré selon le procédé décrit ci-avant pour la FePcS. On a obtenu un catalyseur dont la teneur en MnPcS est de 6,7 µmol (7,6 mg) par gramme de polymère modifié.

### Préparation de MnPcS-PVPMe⁺(2) :

Ce catalyseur a été préparé par méthylation des sites pyridine non coordinés du catalyseur obtenu ci-avant selon le procédé décrit précédemment pour la FePcS-PVPMe⁺(2) ; sa teneur en MnPcS est de 3,6 µmol (4,1 mg) par gramme de polymère modifié.

### Conditions générales mises en oeuvre dans les exemples :

On a utilisé comme oxydants peroxydiques d'une part l'eau oxygénée en solution aqueuse à 35 % en poids et le monopersulfate de potassium sous forme de son sel triple 2KHSO₅.KHSO₄.K2SO₄ (M=615). Le suivi des réactions est réalisé par chromatographie liquide haute pression (CLHP) sur colonne en phase inverse C18 avec un éluant méthanol-eau (50 % en volume) avec détection à 280 nm.

### EXEMPLE 1

On a oxydé à température ambiante et sous atmosphère d'air, 20 µmol de trichloro-2,4,6, phénol en solution dans 500 µl d'acétonitrile par 100 µmol d'eau oxygénée sous forme d'une solution de 10 µl à 35 % en poids diluée dans 500 µl de tampon phosphate à pH 7, en présence de 30 mg du catalyseur FePcS-Amb-1 décrit plus haut (soit 0,2 µmol de FePcS). On observe pendant les trois premières minutes de réaction la formation de dichloro-2, 6 benzoquinone identifiée par CLHP et CPV-masse (couplage chromatographie en phase vapeur - spectrométrie de masse). Cette quinone est ensuite transformée rapidement en des produits de masse moléculaire élevée.

### ESSAI COMPARATIF 1

A titre comparatif on a répété l'exemple 1 mais après avoir remplacé le catalyseur FePcS-Amb-1 par 500 µl d'une solution aqueuse à 0,4 mmol par litre (soit 0,2 µmol) de FePcS.

### ESSAIS COMPARATIFS 2 à 3

On a reproduit l'exemple 1 mais après avoir remplacé le catalyseur FePcS-Amb-1 par respectivement : 32 mg de catalyseur FePcS-PVP(2) et 49 mg de catalyseur FePcS-PVPMe⁺(2), soit 0,2 µmol de FePcS dans tous les cas.

### ESSAIS COMPARATIFS 4

On a répété l'essai comparatif 2 après avoir remplacé le catalyseur FePcS-PVP(2) par 75 mg de catalyseur MnPcS-PVPMe⁺(2), soit 0,2 µmole de MnPcS.

### ESSAI COMPARATIF 5

On a répété l'essai comparatif 1 après avoir remplacé le catalyseur la FePcS par la CoPcS libre.

### EXEMPLE 2

On a opéré comme à l'exemple 1 mais en présence de 3,7 % en mole de FePcS par rapport au trichlorophénol (soit 111 mg de catalyseur FePcS-Amb-1 ou 0,74 µmol de FePcS).

### EXEMPLES 2-1 et 2-2

On a procédé comme à l'exemple 2 mais en réutilisant le catalyseur séparé du milieu réactionnel de l'exemple 2 par filtration. Ce catalyseur a été une nouvelle fois séparé du milieu réactionnel de l'exemple 2-1 et recyclé à l'exemple 2-2. On ne note aucune diminution de la vitesse de la réaction.

### EXEMPLE 3

On reproduit l'exemple 1 mais en opérant en absence de tampon phosphate ; le pH du milieu réactionnel est alors de 5,5.

### EXEMPLE 4

On a opéré comme à l'exemple 1 mais après avoir remplacé le catalyseur FePcS-Amb-1 par 13 mg de catalyseur MnPcS-Amb, soit 0,2 µmol de MnPcS.

### ESSAI COMPARATIF 6

On a opéré comme à l'essai comparatif 1 après avoir remplacé la FePcS par la MnPcS libre, le milieu réactionnel étant maintenu à pH 8,5 par un tampon borate à 0,05 mol/l.

### EXEMPLE 5

On a opéré dans les mêmes conditions qu'à l'exemple 1 après avoir remplacé l'eau oxygénée par 30,7 mg de persulfate de potassium sous forme de son sel triple, en solution dans 1000µl d'eau (soit l00 µmol de KHSO₅) et ajouté 500 µl d'eau (soit un volume réactionnel de 2 ml).

### EXEMPLE 6

On a reproduit l'exemple 5 mais après avoir remplacé les 500 µl d'eau par 500 µl de tampon phosphate à 0,5 mole/l pour amener le pH du milieu à 7.

### EXEMPLE 6-1

On a opéré comme à l'exemple 6 mais en utilisant comme catalyseur celui récupéré par filtration de la masse réactionnelle de l'exemple 6

### EXEMPLE 7

On a oxydé à température ambiante et sous atmosphère d'air, 2 µmol de benzo(a)pyrène sous forme d'une solution à 2 mmol/l dans l'acétonitrile, par 10 µmol d'eau oxygénée (solution de 10 µl à 35 % en poids diluée dans 1000 µl de tampon phosphate à pH 7), en présence de 4,7 mg du catalyseur FePcS-Amb-2 décrit plus haut (soit 20 nmol de FePcS). Le benzopyrène est oxydé en un produit orange constitué par un mélange de trois quinones isomères ayant le même spectre de masse (m/z à 282 (M⁺,100%),254 (M⁺ - CO, 17,4 %), 226 (M⁺ -2CO, 17,4 %). Après séparation par chromatographie liquide sur alumine et comparaison avec les spectres UV-visibles décrits par R.J. Lorentzen et al, Biochemistry, 1975, vol. 14 p. 3970, elles ont été identifiées comme étant la benzo(a)pyrènedione-6, 12, la benzo(a)pyrènedione-1, 6, et la benzo(a)pyrènedione-3,6.

### EXEMPLE 8

On a reproduit l'exemple 7 toutes choses étant égales par ailleurs, mais après avoir porté le rapport molaire catalyseur FePcS-Amb-2/benzo(a)pyrène à 3,7 % (17,4 mg de catalyseur représentant 74 nmol de FePcS ont été chargés).

### EXEMPLE 9

On a reproduit l'exemple 7 toutes choses étant égales par ailleurs, mais après avoir remplacé l'eau oxygénée par KHSO₅ ; on a chargé 3,1 mg de sel triple, soit 10 µmol de KHSO₅, en solution dans 1000 µl d'eau.

### EXEMPLE 10

On a oxydé à température ambiante et sous atmosphère d'air, 20 µmol de pentachlorophénol sous forme d'une solution à 40 mmol/l dans l'acétonitrile (soit 500 µl de solution), par 100 µmol d'eau oxygénée (solution de 10 µl à 35 % en poids de H₂O₂ diluée dans 500 µl de tampon phosphate à pH 7), en présence de 47 mg du catalyseur FePcS-Amb-2 décrit plus haut (soit 0,2 µmol de FePcS). 500 µl d'acétonitrile ont été ajoutés pour assurer la solubilisation complète du pentachlorophénol.

### EXEMPLE 11

On a opéré comme à l'exemple 10 mais en présence de 3,7 % en moles de FePcS, soit 111 mg de catalyseur FePcS-Amb-1 (0,74 µmol de FePcS).

### EXEMPLE 12

On a reproduit l'exemple 1 en limitant la présence d'acétonitrile à la quantité nécessaire pour solubiliser le trichlorophénol. Pour cela on a oxydé à température ambiante et sous atmosphère d'air, 200 nmol de trichloro-2, 4, 6, phénol (5 µl d'une solution dans d'acétonitrile à 40 mmol/l), par 1 µmol d'eau oxygénée à 3,5 % en poids dilué dans 0,5 ml de tampon phosphate à pH 7, en présence de 3 mg du catalyseur FePcS-Amb-1 (soit 20 nmol de FePcS). On ajoute au mélange réactionnel 1,5 ml d'eau.

### ESSAIS COMPARATIFS 7 à 10

L'essai 7 a été réalisé pour oxyder du trichlorophénol en présence d'un complexe du Fe(III) avec la mésotétra(parasulfonatophényl) porphyrine en présence d'H₂O₂ dans les conditions décrites dans le brevet FR 89 16690 publié sous le n° 2.655.774.

L'essai 8 est réalisé comme l'essai 7 mais le complexe de Fe(III) de mésotétra(parasulfonatophényl) porphyrine est supporté sur une Amberlite du même type que dans l'exemple 1.

L'essai 9 est identique à l'essai 8, si ce n'est que l'oxydation du trichlorophénol (TCP) est obtenue après une troisième utilisation du catalyseur. La récupération du catalyseur entre chaque utilisation est obtenue par simple filtration en fin de réaction comme il est fait dans l'exemple 2-2.

L'essai 10 se distingue de l'essai 9 en ce que l'oxydation se fait en présence de persulfate de potassium au lieu d'eau oxygénée.

Les conditions principales et les résultats des exemples et essais comparatifs sont rassemblés dans le tableau (I) ci-après.

**TABLEAU I**

| Ex. | Substrat | Catalyseur | %cata/substrat en moles | pH | oxydant | conversion | | |
|---|---|---|---|---|---|---|---|---|
| | | | | | | 1mn | 5mn | 60mn |
| 1 | TCP(1) | FePcS-Amb-1 | 1 | 7 | H₂O₂ | 65 | 80 | 93 |
| 2 | " | " | 3,7 | " | " | 63 | 93 | 99 |
| 2-1 | " | " | " | " | " | 70 | 92 | 97 |
| 2-2 | " | " | " | " | " | 69 | 88 | 95 |
| 3 | " | " | 1 | 5,5 | " | 13 | 28 | 45 |
| 4 | " | MnPcS-Amb | 1 | 7 | " | 38 | 45 | 63 |
| 5 | " | FePcS-Amb-1 | 1 | 2 | KHSO₅ | 43 | 71 | 98 |
| 6 | " | " | 1 | 7 | " | 44 | 80 | 90 |
| 6-1 | " | " | " | " | " | 13 | 20 | 35 |
| 7 | BZP(2) | FePcS-Amb-2 | " | " | H₂O₂ | 12 | 14 | 24 |
| 8 | " | " | 3,7 | " | " | 15 | 19 | 26 |
| 9 | " | " | 1 | " | KHSO₅ | | 7 | 76 |
| 10 | PCP(3) | " | " | " | H₂O₂ | 27 | 36 | 65 |
| 11 | " | " | 3,7 | " | " | 57 | 67 | 88 |
| 12 | TCP | FePcS-Amb-1 | 10 | " | " | 33 | 64 | 88 |
| EC(4) | | | | | | | | |
| 1 | TCP" | FePcS | 1 | 7 | H₂O₂ | 6 | 38 | 43 |
| 2 | " | FePc-PVP(2) | " | " | " | 41 | 53 | 59 |
| 3 | " | FePc-PVPMe+ (2) | " | " | " | 33 | 40 | 40 |
| 4 | " | MnPc-PVPMe+ (2) | " | " | " | 41 | 47 | 53 |
| 5 | " | CoPcS | " | 7 | " | | | 0 |
| 6 | " | MnPcS | " | 8,5 | " | 8 | 25 | 25 |
| 7 | " | FeTPPS (5) | 1 | 7 | H2O2 | 8 | 40 | 48 |
| 8 | " | FeTPPS-Amb-1 | " | " | " | 6 | 12 | 16 |
| 9 | " | FeTPPS-Amb-1 | " | " | " | 2 | 4 | 5 |
| 10 | " | FeTPPS-Amb-1 | " | " | KHSO₅ | 3 | 6 | 8 |

| | | | | | | | | |
|---|---|---|---|---|---|---|---|---|
| (1) TCP désigne le trichloro- 2, 4, 6, phénol | | | | | | | | |
| (2) BZP désigne le benzo(a)pyrène | | | | | | | | |
| (3) PCP désigne le pentachlorophénol | | | | | | | | |
| (4) essai comparatif | | | | | | | | |

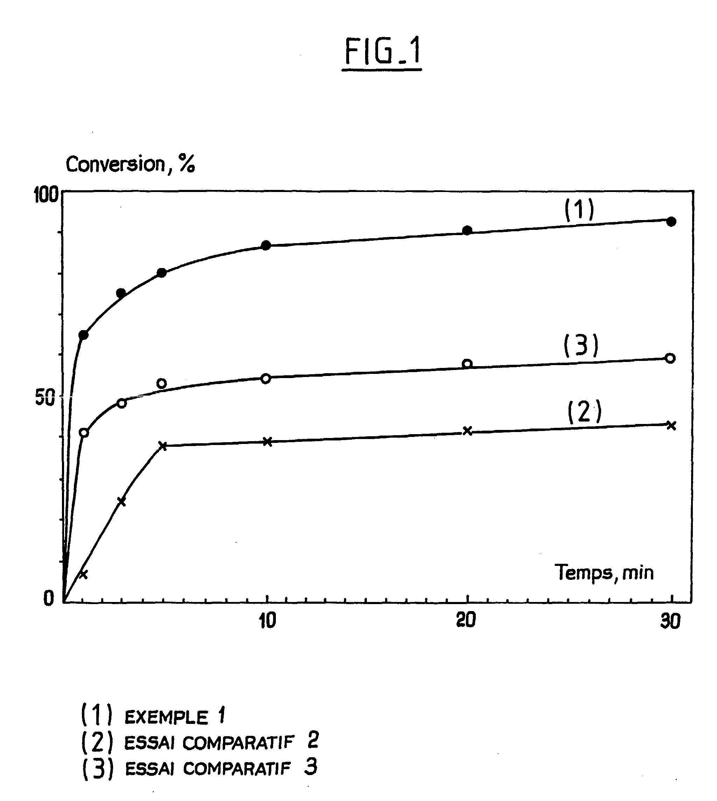

Au cours de l'exemple 1 et des essais comparatifs 1 et 2, on a dosé le trichlorophénol non transformé après 1, 3, 5, 10, et 30 minutes. Les résultats obtenus ont été utilisés pour tracer les courbes d'évolution du taux de conversion du trichlorophénol en fonction du temps. Ces courbes sont représentées sur la figure 1. On constate à l'examen du graphique que l'utilisation de FePcS supportée sur la résine cationique styrènique se traduit par une vitesse d'oxydation du trichlorophénol supérieure à celles obtenue avec la FePcS libre ou avec la FePcS supportée par la polyvinylpyridine, à l'inverse de ce qui était obtenu avec les métalloporphyrines. La comparaison de l'exemple 1 et de l'essai comparatif 3 fait ressortir le caractère avantageux pour l'activité catalytique de la FePcS de l'emploi comme support des résines cationiques du type polystyrène par rapport à l'utilisation des polyvinylpyridinium.

En comparant l'exemple 1 et l'essai comparatif 7, on note que la métalloporphyrine FeTPPS a une activité comparable en phase homogène à celle de la métallophtalocyanine FePcS (48 % de conversion de TCP en 60 min avec FeTPPS, comparé à 43 % de conversion avec FePcS). Par contre la différence est importante lorsque ces mêmes catalyseurs sont supportés sur amberlite. L'essai comparatif 8 indique que la conversion de TCP avec le catalyseur supporté FeTPPS-Amb-1 est seulement de 16 % en 60 mn au lieu de 93 % avec FePcS-Amb-1 (exemple 1). Cette différence est encore plus nette dans les expériences de recyclage de catalyseurs. Les catalyseurs supportés sur amberlite sont récupérés après deux heures de réaction par filtration et réutilisés dans une nouvelle réaction d'oxydation catalytique avec une nouvelle charge en TCP et en eau oxygénée. Alors que la conversion de TCP avec la métallophtalocyanine supportée FePcS-Amb-1 (exemple 9) est de 95 % en 60 min (contre 93 % à la première réaction catalytique (exemple 1), la conversion de TCP n'est que de 5 % avec la métalloporphyrine supportée FeTPP-Amb-1 au troisième recyclage (essai comparatif 9). Avec le monopersulfate de potassium, la conversion de TCP après le troisième recyclage n'est que de 8 % en 60 min (essai comparatif 10).

On met ainsi en évidence la très bonne tenue de la métallophtalocyanine de fer supporté sur amberlite lors du recyclage du catalyseur et l'effondrement de l'activité catalytique de la porphyrine de fer FeTPPS supportée sur la même amberlite, due probablement à la décomposition de ce catalyseur.

### EXEMPLE 13

Il s'agit de montrer dans le présent exemple que l'oxydation du 2,4,6-trichlorophénol (ou TCP), selon l'invention, se traduit par une dégradation complète du cycle aromatique, avec notamment libération d'ions chlorures.

Dans les conditions de l'exemple 2 du tableau I, c'est-à-dire avec le couple FePcS-Amb-1/H₂O₂, 2,1 ± 0,1 ions Chlorures Cl⁻ sont libérés après 1 heure de réaction. Ils ont été dosés selon la méthode au thiocyanate de mercure décrite par T.M. Florence et Y.J. Famar, Anal. Chim. Acta, vol. 54, p. 373, 1971).

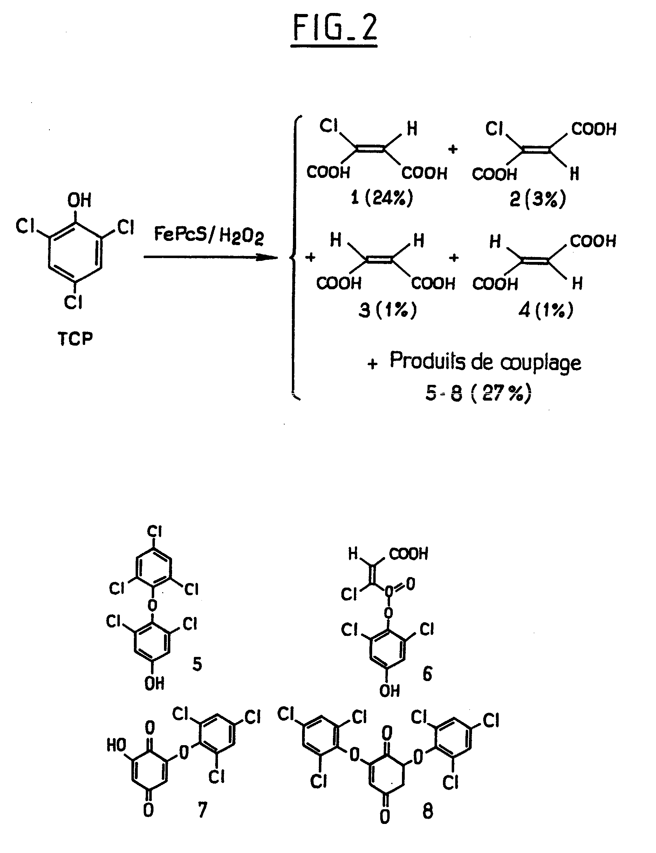

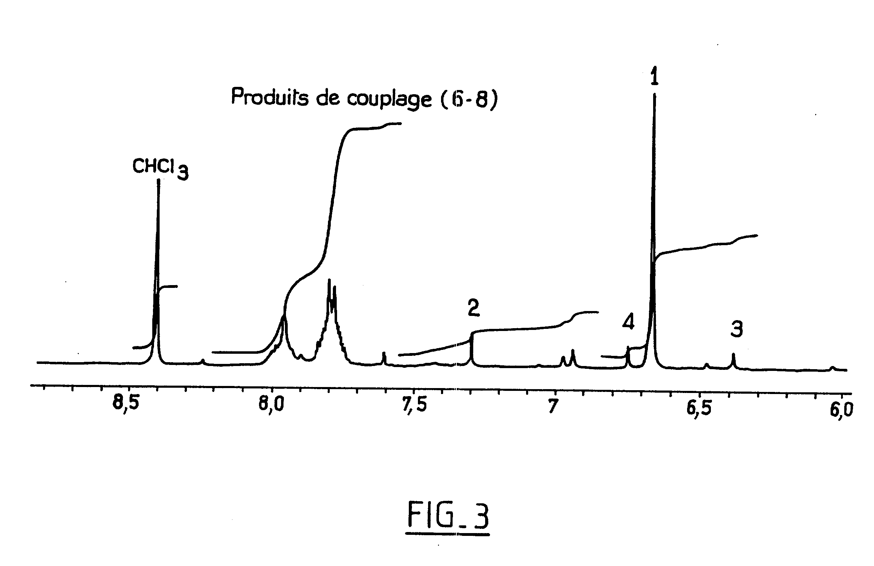

Dans ces conditions de l'exemple 2, on a pu identifier huit produits d'oxydation du TCP décrits dans les figures 2 et 3 (spectre RMN du proton à 250 MHZ dans le DMSO, avec CHCl₃ comme étalon interne) ci-jointes. Les quatre premiers composés (1 à 4) sont des produits d'oxydation correspondant à l'ouverture du cycle aromatique (le produit principal étant l'acide chloromaléique). Les chiffres indiqués entre parenthèses sur la figure 2 sont les rendements en produit isolé. Les quatre autres produits (5 à 8) sont des produits de couplage du TCP qui se forme au début de la réaction. Le composé 6 est un produit d'oxydation partiel du composé 5.

En remplaçant le catalyseur FePcS par un complexe porphyrique FeTPPS du brevet français n° 89 16690 publiée sous le n° 2.655.774, on n'obtient pas de dégradation du cycle aromatique, le produit de dégradation se limite à la 2,6-dichloro-1,4-benzoquinone.

Ces résultats confirment l'efficacité supérieure des métallophtalocyanines supportées comparée aux métalloporphyrines dans l'oxydation de polluants à l'aide de l'eau oxygénée.

## Revendications

1. Procédé de dégradation oxydative de composés organiques peu biodégradables et/ou difficiles à oxyder chimiquement, présents dans des effluents aqueux, au moyen d'un oxydant peroxydique hydrosoluble en présence d'une métallophtalocyanine hydrosoluble supportée comme catalyseur, caractérisé en ce que le catalyseur est une phtalocyanine de fer ou de manganèse immobilisée sur une résine ionique constituée par un copolymère insoluble réticulé dérivé d'un monomère vinylaromatique comportant des groupes cationiques ou anioniques et que l'oxydant péroxydique est pris dans le groupe formé par l'eau oxygénée et les persulfates alcalins.

2. Procédé de dégradation oxydative selon la revendication 1 caractérisé en ce que la résine ionique utilisée comme support de la phtalocyanine présente une pluralité de motifs récurrents de formule : 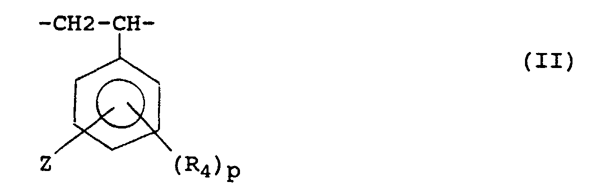 dans laquelle Z représente un radical cationique ou anionique, R₄ un radical alkyle inférieur, p est 0, 1 ou 2.

3. Procédé de dégradation oxydative selon la revendication 2 caractérisé en ce que la résine ionique, utilisée comme support de la phtalocyanine, présente une pluralité de motifs récurrents de formule (II) dans laquelle Z représente plus particulièrement un groupe acide sulfonique SO₃H ou un groupe cationique de formule générale :
-CH₂-(CH₂)ₙ-N⁺(R₁, R₂, R₃) X⁻
dans laquelle n est 0 ou un nombre entier de 1 à 4 ; R1, R2, R3 représentent des radicaux alkyles inférieures ; X représente un atome d'halogène.

4. Procédé de dégradation oxydative selon l'une quelconque des revendications 1 à 3 caractérisé en ce que la résine utilisée comme support comporte en plus une pluralité de motifs de formule générale: 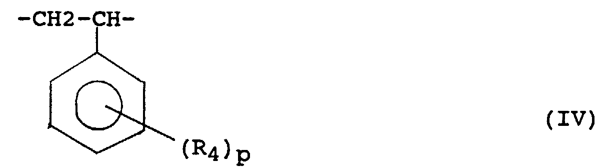 dans laquelle R₄ et p ont la signification donnée pour la formule (II), associés aux motifs à groupes ioniques.

5. Procédé de dégradation oxydative selon la revendication 4 caractérisé en ce que les motifs récurrents de formule (IV) sont des motifs dérivés du styrène ou de l'alpha méthylstyrène.

6. Procédé de dégradation oxydative selon l'une quelconque des revendications 1 à 5 caractérisé en ce que la résine utilisée comme support comporte une pluralité de motifs réticulants dérivés du divinylbenzène.

7. Procédé de dégradation oxydative selon l'une quelconque des revendications 1 à 6 caractérisé en ce que la résine utilisée comme support comporte un nombre de motifs récurrents à groupes ioniques calculé pour introduire de 1 à 10 milliéquivalents de groupes ioniques par gramme de résine sèche, et de 0,1 à 25 % en moles de motifs réticulants par rapport au total des motifs récurrents.

8. Procédé de dégradation oxydative selon l'une quelconque des revendications 1 à 7 caractérisé en ce que la résine utilisée comme support est sous forme de particules de diamètre moyen compris dans un intervalle de 80 à 1000 µm.

9. Procédé de dégradation oxydative selon l'une quelconque des revendications 1 à 7 caractérisé en ce que la phtalocyanine de fer ou de manganèse hydrosoluble est choisie dans le groupe formé par les métallophtalocyanines répondant aux formules générales : 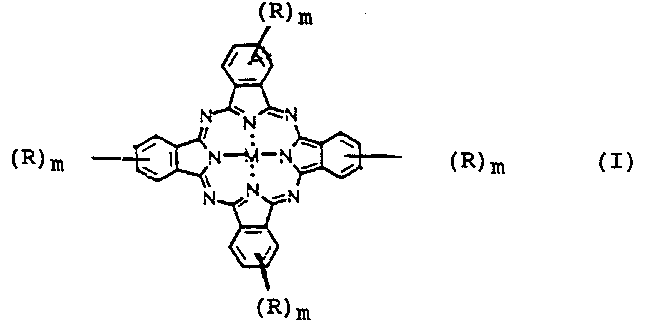 dans laquelle :
- M représente un atome de fer ou de manganèse;
- R représente :
. un groupe acide sulfonique (-SO₃H);
. un groupe ammonium quaternaire de formule généraleCH₂-(CH₂)ₙ-N⁺(R_{1,} R₂, R₃) X⁻ dans laquelle : n est 0 ou un nombre entier de 1 à 4 ; R₁, R₂, R₃ représentent des radicaux alkyles inférieurs ; X représente un atome d'halogène ;
. un radical pyridinium;
. un groupe alkyle inférieur;
. un reste aromatique;
- m est 0 ou un nombre entier de 1 à 4,
avec la restriction que l'un au moins des indices m est égal à 1 et que l'un au moins des substituants R représente un des radicaux hydrophiles précités ; et par les phtalocyanines de fer ou de cobalt dérivées de tétraazaphtalocyanines quaternisées.

10. Procédé de dégradation oxydative selon la revendication 9 caractérisé en ce que la métallophtalocyanine est la tétra sulfo-4, 4', 4", 4"' phtalocyanine de fer ou de manganèse.

11. Procédé de dégradation oxydative selon l'une quelconque des revendications 1 à 10 caractérisé en ce que la quantité de catalyseur mise en oeuvre est calculée pour que le pourcentage en moles de la métallophtalocyanine par rapport au substrat à oxyder soit compris dans un intervalle de 0,01 à 5.

12. Procédé de dégradation oxydative selon l'une quelconque des revendications 1 à 11 caractérisé en ce que le composé faiblement biodégradable et à très faible oxydabilité chimique présente un potentiel d'oxydo réduction supérieur ou égal à 1,45 volts (ref. : Ag/AgCl).

13. Procédé de dégradation oxydative selon l'une quelconque des revendications 1 à 12 caractérisé en ce que le composé faiblement biodégradable et à très faible oxydabilité chimique est pris dans le groupe formé par les hydrocarbures aromatiques polycycliques ; les hydrocarbures aromatiques mono ou polycycliques halogénés ; les halogénoalcanes ou cycloalcanes ; les hydrocarbures arylaliphatiques halogénés ; les halogénophénols.

14. Procédé de dégradation oxydative selon la revendication 13 caractérisé en ce que le composé soumis à l'oxydation est pris dans le groupe formé par le pyrène, le benzo (a) pyrène, l'anthracène, le phénanthrène, le benzanthracène, le biphényle, le bis (chloro-4 phényl)-1, 1, trichloro-2, 2, 2, éthane, l'hexachloro-1, 2, 3, 4, 5, 6, cyclohexane, le tétrachloro-3, 4, 3', 4', biphényle; l'hexachloro-2, 4, 5, 2', 4', 5', biphényle; le dichloro-2, 4, phénol, le trichloro-2, 4, 5, phénol, le trichloro-2, 4, 6, -phénol, le pentachlorophénol, le dichloro 4, 5, guaiacol, le trichloro-4, 5, 6, guaiacol.

15. Procédé de dégradation oxydative selon l'une quelconque des revendications 1 à 14 caractérisé en ce que la réaction est conduite à une température comprise dans un intervalle de 10 à 100°C.

16. Procédé de dégradation oxydative selon l'une quelconque des revendications 1 à 14 caractérisé en ce que l'oxydant peroxydique est l'eau oxygénée.

## Patentansprüche

1. Verfahren zum oxidativen Abbau von biologisch nur schwer abbaubaren und/oder chemisch schwer zu oxidierenden organischen Verbindungen, wie sie in Abwässern vorliegen, mit Hilfe eines wasserlöslichen Peroxidoxidationsmittels in Anwesenheit eines einen Träger aufweisenden, wasserlöslichen Metallphthalocyanins als Katalysator, dadurch **gekennzeichnet**, daß der Katalysator ein Eisen- oder Manganphthalocyanin ist, das auf einem Ionenharz immobilisiert ist, das aus einem vernetzten unlöslichen Copolymer besteht, welches von einem vinylaromatischen Monomer abgeleitet ist, das kationische oder anionische Gruppen umfaßt, und das Peroxidoxidationsmittel aus der Gruppe ausgewählt wird, die aus Wasserstoffperoxid und Alkalipersulfaten besteht.

2. Verfahren zum oxidativen Abbau nach Anspruch 1, dadurch **gekennzeichnet**, daß das als Träger für das Phthalocyanin verwendete Ionenharz eine Vielzahl wiederkehrender Struktureinheiten der Formel 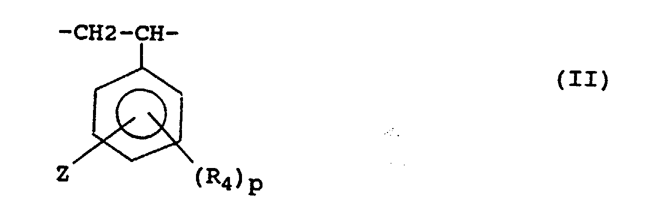 aufweist, worin Z einen kationischen oder anionischen Rest, R₄ einen Niederalkylrest und p 0, 1 oder 2 bedeuten.

3. Verfahren zum oxidativen Abbau nach Anspruch 2, dadurch **gekennzeichnet**, daß das als Träger für das Phthalocyanin verwendete Ionenharz eine Vielzahl wiederkehrender Struktureinheiten der Formel (II) aufweist, in welcher Z insbesondere eine Sulfonsäuregruppe (-SO₃H) oder eine kationische Gruppe der allgemeinen Formel
-CH₂-(CH₂)ₙ-N⁺(R₁, R₂, R₃) X⁻
darstellt, worin n für 0 oder eine ganze Zahl von 1 bis 4 steht, R¹, R₂ und R₃ Niederalkylreste und X ein Halogenatom bedeuten.

4. Verfahren zum oxidativen Abbau nach einem der Ansprüche 1 bis 3, dadurch **gekennzeichnet**, daß das als Träger verwendete Harz außerdem eine Vielzahl von Struktureinheiten der allgemeinen Formel 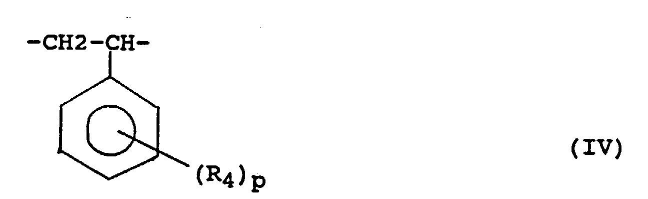 umfaßt, worin R₄ und p die oben im Zusammenhang mit Formel (II) angegebenen Bedeutungen haben, die mit den Ionengruppen aufweisenden Struktureinheiten verbunden sind.

5. Verfahren zum oxidativen Abbau nach Anspruch 4, dadurch **gekennzeichnet,** daß die wiederkehrenden Struktureinheiten der Formel (IV) von Styrol oder α-Methylstyrol abgeleitete Struktureinheiten sind.

6. Verfahren zum oxidativen Abbau nach einem der Ansprüche 1 bis 5, dadurch **gekennzeichnet**, daß das als Träger verwendete Harz eine Vielzahl von Vernetzungseinheiten umfaßt, die von Divinylbenzol abgeleitet sind.

7. Verfahren zum oxidativen Abbau nach einem der Ansprüche 1 bis 6, dadurch **gekennzeichnet**, daß das als Träger verwendete Harz eine Anzahl von wiederkehrenden, Ionengruppen aufweisenden Struktureinheiten, die so berechnet ist, daß 1 bis 10 Milliäquivalente Ionengruppen pro Gramm trockenes Harz eingebaut werden, und 0,1 bis 25 Mol.-%, bezogen auf die Gesamtheit der wiederkehrenden Struktureinheiten, an Vernetzungseinheiten enthält.

8. Verfahren zum oxidativen Abbau nach einem der Ansprüche 1 bis 7, dadurch **gekennzeichnet**, daß das als Träger verwendete Harz in Form von Teilchen mit einem mittleren Durchmesser in einem Bereich von 80 bis 1000 µm vorliegt.

9. Verfahren zum oxidativen Abbau nach einem der Ansprüche 1 bis 7, dadurch **gekennzeichnet**, daß das wasserlösliche Eisen- oder Manganphthalocyanin aus der Gruppe ausgewählt wird, die aus Metallphthalocyaninen der allgemeinen Formel 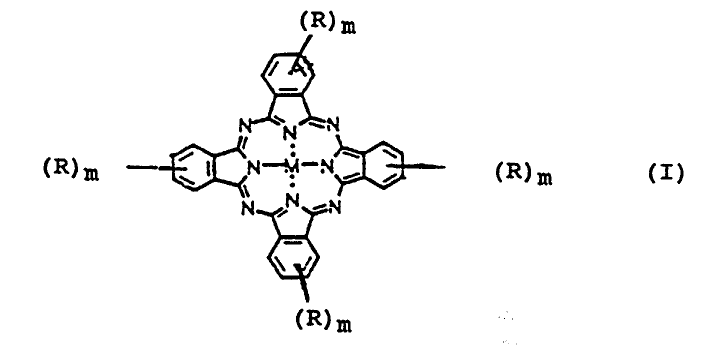 worin
M ein Eisen- oder Manganatom,
R eine Sulfonsäuregruppe (-SO₃H),
eine quaternäre Ammoniumgruppe der allgemeinen Formel CH₂-(CH₂)ₙ-N⁺(R₁, R₂, R₃) X⁻, in welcher n 0 oder eine ganze Zahl von 1 bis 4, R₁, R₂ und R₃ Niederalkylreste und X ein Halogenatom darstellen, einen Pyridiniumrest,
eine Niederalkylgruppe oder
einen aromatischen Rest und
m 0 oder eine ganze Zahl von 1 bis 4
bedeuten, mit der Maßgabe, daß wenigstens einer der Indices m 1 ist und wenigstens einer der Substituenten R einen der oben angeführten hydrophilen Reste darstellt,
sowie aus den von quarternisierten Tetraazaphthalocyaninen abgeleiteten Eisen- oder Cobaltphthalocyaninen besteht.

10. Verfahren zum oxidativen Abbau nach Anspruch 9, dadurch **gekennzeichnet,** daß das Metallphthalocyanin Eisen- oder Mangan-4, 4', 4", 4"'-tetrasulfo-phthalocyanin ist.

11. Verfahren zum oxidativen Abbau nach einem der Ansprüche 1 bis 10, dadurch **gekennzeichnet**, daß die Menge des verwendeten Katalysators so berechnet wird, daß der Mol.-%-Anteil an Metallphthalocyanin im Verhältnis zu dem zu oxidierenden Substrat in einem Bereich zwischen 0,01 und 5 liegt.

12. Verfahren zum oxidativen Abbau nach einem der Ansprüche 1 bis 11, dadurch **gekennzeichnet**, daß die biologisch nur schwer abbaubare und chemisch nur sehr schwer oxidierbare Verbindung ein Redoxpotential von über oder gleich 1,45 V (Referenz Ag/AgCl) aufweist.

13. Verfahren zum oxidativen Abbau nach einem der Ansprüche 1 bis 12, dadurch **gekennzeichnet,** daß die biologisch nur schwer abbaubare und chemisch nur sehr schwer oxidierbare Verbindung aus der Gruppe gewählt wird, die von polycyclischen aromatischen Kohlenwasserstoffen, halogenierten mono- oder polycyclischen aromatischen Kohlenwasserstoffen, Halogenalkanen oder Cycloalkanen, halogenierten arylaliphatischen Kohlenwasserstoffen und Halogenphenolen gebildet wird.

14. Verfahren zum oxidativen Abbau nach Anspruch 13, dadurch **gekennzeichnet**, daß die zu oxidierende Verbindung aus der Gruppe gewählt wird, die von Pyren, Benzo(a)pyren, Anthracen, Phenanthren, Benzanthrazen, Biphenyl, 1, 1-Bis-(chlor-4-phenyl)-2, 2, 2-trichlorethan, 1, 2, 3, 4, 5, 6-Hexachlorcyclohexan, 3, 4, 3', 4'-Tetrachlorbiphenyl, 2, 4, 5, 2', 4', 5'-Hexachlorbiphenyl, 2, 4-Dichlorphenol, 2, 4, 5-Trichlorphenol, 2, 4, 6-Trichlorphenol, Pentachlorphenol, 4, 5-Dichlorguaiacol und 4, 5, 6-Trichlorguaicol gebildet wird.

15. Verfahren zum oxidativen Abbau nach einem der Ansprüche 1 bis 14, dadurch **gekennzeichnet,** daß die Umsetzung bei einer Temperatur in einem Bereich von 10 bis 100°C durchgeführt wird.

16. Verfahren zum oxidativen Abbau nach einem der Ansprüche 1 bis 14, dadurch **gekennzeichnet,** daß das Peroxidoxidationsmittel Wasserstoffperoxid ist.

## Claims

1. Process for the oxidative degradation of organic compounds that are poorly biodegradable and/or difficult to oxidise chemically and that are present in aqueous effluents, by means of a water-soluble peroxide oxidant in the presence of a supported water-soluble metalophthalocyanine as catalyst, characterised in that the catalyst is an iron or manganese phthalocyanine immobilised on an ionic resin formed by a cross-linked insoluble copolymer derived from a vinyl-aromatic monomer comprising cationic or anionic groups and in that the peroxide oxidant is taken from the group formed by hydrogen peroxide and alkaline persulphates.

2. Process for oxidative degradation according to Claim 1, characterised in that the ionic resin used as the phthalocyanine support has a plurality of repeating units of the formula: 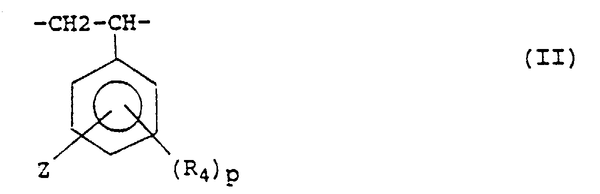 wherein Z represents a cationic or anionic radical, R₄ represents a lower alkyl radical, p is 0, 1 or 2.

3. Process for oxidative degradation according to Claim 2, characterised in that the ionic resin used as the phthalocyanine support has a plurality of repeating units of formula (II) wherein Z represents more especially a sulphonic acid group SO₃H or a cationic group of the general formula:
-CH₂-(CH₂)ₙ-N⁺(R₁, R₂, R₃) X⁻
wherein n is 0 or an integer from 1 to 4; R₁, R₂, R₃ represent lower alkyl radicals; X represents a halogen atom.

4. Process for oxidative degradation according to any one of Claims 1 to 3, characterised in that the resin used as the support also comprises a plurality of units of the general formula: 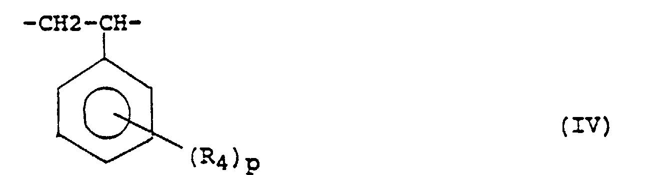 wherein R₄ and p have the meaning given for formula (II), which are associated with the units having ionic groups.

5. Process for oxidative degradation according to Claim 4, characterised in that the repeating units of formula (IV) are units derived from styrene or from alpha-methylstyrene.

6. Process for oxidative degradation according to any one of Claims 1 to 5, characterised in that the resin used as the support comprises a plurality of cross-linking units derived from divinylbenzene.

7. Process for oxidative degradation according to any one of Claims 1 to 6, characterised in that the resin used as the support comprises a number of repeating units having ionic groups that is calculated to introduce from 1 to 10 milliequivalents of ionic groups per gram of dry resin, and from 0.1 to 25 mole % of cross-linking units relative to the total number of repeating units.

8. Process for oxidative degradation according to any one of Claims 1 to 7, characterised in that the resin used as the support is in the form of particles having an average diameter in the range of from 80 to 1000 µm

9. Process for oxidative degradation according to any one of Claims 1 to 7, characterised in that the water-soluble iron or manganese phthalocyanine is selected from the group formed by the metalophthalocyanines corresponding to the general formulae: 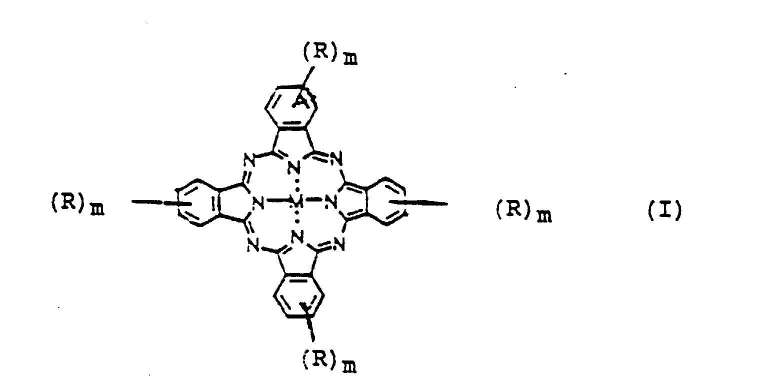 wherein:
- M represents an iron or manganese atom;
- R represents:
. a sulphonic acid group (-SO₃H); a quaternary ammonium group of the general formula -CH₂-(CH₂)ₙ-N⁺(R₁,R₂,R₃) X⁻ in which : n is 0 or an integer from 1 to 4; R₁, R₂, R₃ represent lower alkyl radicals; X represents a halogen atom;
. a pyridinium radical;
. a lower alkyl group;
. an aromatic residue;
- m is 0 or an integer from 1 to 4,
with the restriction that at least one of the indices m is equal to 1 and that at least one of the substituents R represents one of the above-mentioned hydrophilic radicals; and by iron or cobalt phthalocyanines derived from quaternised tetraazaphthalocyanines.

10. Process for oxidative degradation according to Claim 9, characterised in that the metalophthalocyanine is iron or manganese 4,4',4",4"'-tetrasulphophthalocyanine.

11. Process for oxidative degradation according to any one of Claims 1 to 10, characterised in that the amount of catalyst used is calculated so that the molar percentage of the metalophthalocyanine relative to the substrate to be oxidised is in the range of from 0.01 to 5.

12. Process for oxidative degradation according to any one of Claims 1 to 11, characterised in that the compound that is poorly biodegradable and that is very difficult to oxidise chemically has an oxidoreduction potential greater than or equal to 1.45 volts (ref. : Ag/AgCl).

13. Process for oxidative degradation according to any one of Claims 1 to 12, characterised in that the compound that is poorly biodegradable and that is very difficult to oxidise chemically is taken from the group formed by the polycyclic aromatic hydrocarbons; the halogenated mono- or poly-cyclic aromatic hydrocarbons; the haloalkanes or cycloalkanes; the halogenated arylaliphatic hydrocarbons; the halophenols.

14. Process for oxidative degradation according to Claim 13, characterised in that the compound subjected to oxidation is taken from the group formed by pyrene, benzo(a)pyrene, anthracene, phenanthrene, benzanthracene, biphenyl, 1,1-bis-(4-chlorophenyl)-2,2,2-trichloroethane, 1,2,3,4,5,6-hexachlorocyclohexane, 3,4,3',4'-tetrachlorobiphenyl; 2,4,5,2',4',5'-hexachlorobiphenyl; 2,4-dichlorophenol, 2,4,5-trichlorophenol, 2,4,6-trichlorophenol, pentachlorophenol, 4,5-dichloroguaiacol, 4,5,6-trichloroguaiacol.

15. Process for oxidative degradation according to any one of Claims 1 to 14, characterised in that the reaction is carried out at a temperature in the range of from 10 to 100°C.

16. Process for oxidative degradation according to any one of Claims 1 to 14, characterised in that the peroxide oxidant is hydrogen peroxide.
